# EUROPEAN PATENT SPECIFICATION

(11) **EP 2 667 202 B1**
(45) Date of publication and mention of the grant of the patent: **08.05.2019**
(21) Application number: 12736604.5
(22) Date of filing: 20.01.2012
(51) Int. Cl.: G01P 15/12, G01P 15/18, G01P 21/00, G01P 15/08

(54) **ACCELERATION SENSOR**
BESCHLEUNIGUNGSMESSER
CAPTEUR D'ACCÉLÉRATION

(30) Priority: 20.01.2011 JP 2011009632; 30.05.2011 JP 2011119987
(43) Date of publication of application: 27.11.2013
(73) Proprietor: Panasonic Intellectual Property Management Co., Ltd., Osaka-shi, Osaka 540-6207 (JP)
(72) Inventor: IMANAKA, Takashi, Osaka-shi Osaka 540-6207 (JP); AIZAWA, Hiroyuki, Osaka-shi Osaka 540-6207 (JP); UMEHARA, Hiroki, Osaka-shi Osaka 540-6207 (JP)
(74) Representative: Vigand, Philippe
(86) International application number: PCT/JP2012/000334
(87) International publication number: WO 2012/098901

(56) References cited:
- EP-A1- 2 037 285
- EP-A2- 1 887 365
- WO-A1-94/12886
- JP-A- 3 202 777
- JP-A- 8 160 070
- JP-A- 10 177 033
- JP-A- 11 101 816
- JP-A- 11 101 816
- US-A- 5 101 669
- US-A- 5 138 414
- US-A1- 2009 039 908

## Description

### TECHNICAL FIELD

The present invention relates to an acceleration sensor used for vehicle-mounted, mobile, and other terminals.

### BACKGROUND ART

Fig. 19 is a top view of conventional acceleration sensor 1 described in Patent Literature 1. Figs. 20A and 20B are sectional views of sensor 1 at line 20A-20A shown in Fig. 19. Sensor 1 includes frame 3 having hollow space 2 at an inside thereof, beams 4, 5, 6, and 7 having one ends connected to frame 3, plummet 8 connected to other ends of beams 4, 5, 6, and 7, auxiliary plummets 9, 10, 11, and 12 connected to plummet 8, and sensing units 13, 14, 15, and 16 provided on beams 4, 5, 6, and 7, respectively. Beams 4, 5, 6, and 7 extend from frame 3 to hollow space 2.

Acceleration sensor 1 may exhibit a buckling phenomenon in which sensor 1 changes its shape due to stress remaining in beams 4, 5, 6, and 7 when frame 3 is bonded onto substrate 18 with bonding material 17. In particular, plummet 8 is connected to frame 3 with the four beams, and thus, the beams bend in buckling modes different from one another. The buckling phenomenon affects the sensitivity of acceleration sensed by sensing units 13, 14, 15, and 16, and thus the different buckling modes of four beams 4, 5, 6, and 7 degrade the reliability of sensor 1.

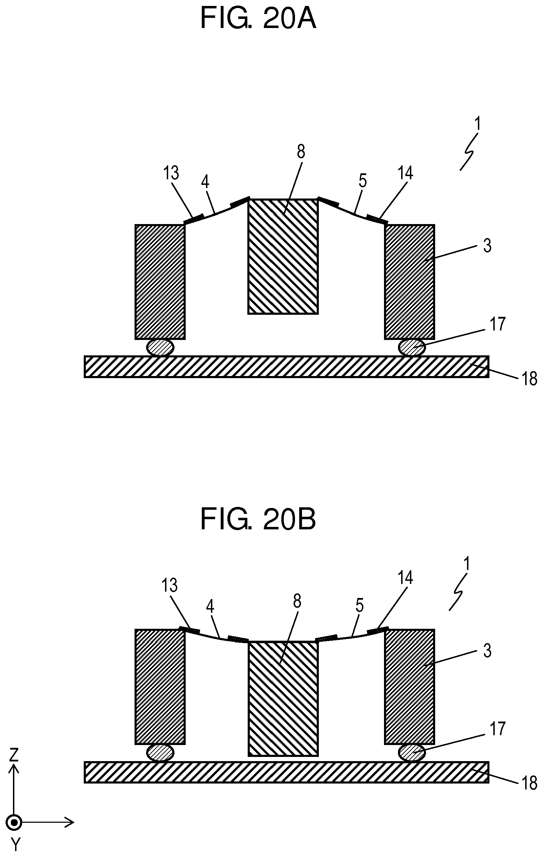

Figs. 20A and 20B illustrate different buckling modes of sensor 1. When frame 3 is bonded onto substrate 18 with bonding material 17, stress remains and accumulates in beams 4, 5, 6, and 7. The residual stress causes beams 4, 5, 6, and 7 to exhibit two different buckling modes: one with an upper surface of plummet 8 higher than that of frame 3 (as shown in Fig. 20A); and the other, lower (as shown in Fig. 20B). These modes cause variations in the sensitivity of acceleration sensed by sensing units 13, 14, 15, and 16. Further, a shock to sensor 1 or a release of stress with elapsed time transitions the buckling modes shown in Figs. 20A and 20B, which changes the sensitivity with elapsing of time.

Fig. 21 is a top view of existing acceleration sensor 101 described in patent literature 2. Acceleration sensor 101 includes frame 102, flexible part 103 having one end connected to frame 102, flexible part 104 having one end connected to frame 102, and strain resistors 105 and 106 provided on upper parts of flexible parts 103 and 104. Flexible part 103 extends from frame 102 in the Y-axis positive direction; flexible part 104 extends from frame 102 in the Y-axis negative direction. Acceleration sensor 101 senses acceleration in the Y-axis direction based on strain resistors 105 and 106.

Sensor 101 degrades its temperature characteristics resulting from the difference in the temperature characteristics of strain resistors 105 and 106.

### CITATION LIST

### PATENT LITERATURE

Patent Literature 1 Japanese Patent Laid-Open Publication No. 2007-85800
Patent Literature 2 Japanese Patent Laid-Open Publication No. 04-130276

Other acceleration sensors are also disclosed in the following documents of the prior art:
- US-A-5 101 669;
- US-A1-2009/039908;
- EP-A1-2 037 285;
- EP-A2-1 887 365;
- WO-A1-94/12886;
- JP-A-11 101816;
- US-A-5 138 414.

In particular, US-A-5 101 669 discloses an acceleration sensor as defined in the preamble of claim 1.

### SUMMARY

An acceleration sensor according to the present invention is defined in claim 1.

This acceleration sensor reduces variations and temporal changes in its sensitivity.

### BRIEF DESCRIPTION OF DRAWINGS

Fig. 1 is a top view of an acceleration sensor according to a first example that is not part of the claimed invention.
Fig. 2 is a top view of another acceleration sensor according to the first example.
Fig. 3A is a top view of the acceleration sensor according to the first example.
Fig. 3B is a sectional view of the acceleration sensor at line 3B-3B shown in Fig. 3A.
Fig. 3C is a sectional view of the acceleration sensor at line 3C-3C shown in Fig. 3A.
Fig. 3D is a circuit diagram of the acceleration sensor according to the first example.
Fig. 3E is a circuit diagram of the acceleration sensor according to the first example.
Fig. 3F is a circuit diagram of the acceleration sensor according to the first example.
Fig. 4 illustrates output fluctuations of the acceleration sensor according to the first example upon having a shock applied thereto.
Fig. 5A illustrates changes of the sensitivity of a comparative example of an acceleration sensor with lapse of time.
Fig. 5B illustrates changes in the sensitivity of the sensor according to the first example with lapse of time.
Fig. 6 is a top view of still another acceleration sensor according to the invention.
Fig. 7 is a top view of a further sensor according to the first example.
Fig. 8 is a top view of a further sensor according to the first example.
Fig. 9 is a top view of a further sensor according to the first example.
Fig. 10 is a top view of an acceleration sensor according to a second example.
Fig. 11 is a top view of an acceleration sensor according to a third example.
Fig. 12 illustrates characteristics of the acceleration sensor according to the third example.
Fig. 13 is a top view of another acceleration sensor according to the third example.
Fig. 14 is a top view of still another acceleration sensor according to the third example.
Fig. 15 is a top view of a further acceleration sensor according to the third example.
Fig. 16 is a top view of a further acceleration sensor according to the third example.
Fig. 17 is a top view of a further acceleration sensor according to the third example.
Fig. 18 is a top view of a further sensor according to the third example.
Fig. 19 is a top view of a conventional acceleration sensor.
Fig. 20A is a sectional view of the conventional acceleration sensor at line 20A-20A shown in Fig. 19.
Fig. 20B is a sectional view of the conventional sensor at line 20A-20A shown in Fig. 19.
Fig. 21 is a top view of another conventional acceleration sensor.

### DETAIL DESCRIPTION OF PREFERRED EMBODIMENTS

### First Example

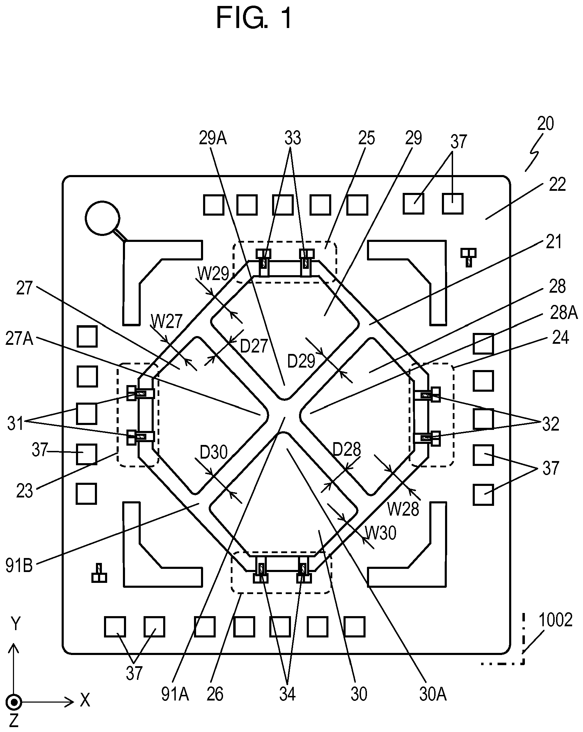

Fig. 1 is a top view of acceleration sensor 20 according to the first example. Acceleration sensor 20 includes frame 22 having hollow space 21 at an inside thereof, beams 23, 24, 25, and 26 having one ends connected to frame 22, plummets 27, 28, 29, and 30, and sensing units 31, 32, 33, and 34 provided on beams 23, 24, 25, and 26, respectively. Beams 23, 24, 25, and 26 extend from frame 22 to hollow space 21. Plummet 27 is connected to the other ends of beams 23. Plummet 28 is connected to the other ends of beams 24. Plummet 29 is connected to the other ends of beams 25. Plummet 30 is connected to the other ends of beams 26. Plummets 27 and 28 face each other in a direction of an X-axis across center 91A of hollow space 21. Plummets 29 and 30 face each other in a direction of a Y-axis across center 91A. Frame 22 is fixed to substrate 1002, thereby fixing acceleration sensor 20 to substrate 1002. Plummets 27, 28, 29, and 30 are connected to frame 22 only with beams 23, 24, 25, and 26.

This structure allows plummets 27, 28, 29, and 30 to be supported by beams 23, 24, 25, and 26 only in single directions, respectively. In other words, plummet 27 has a cantilever structure supported by beam 23 only in a positive direction of the X-axis from frame 22. Plummet 28 has a cantilever structure supported by beam 24 only in a negative direction of the X-axis from frame 22. Plummet 29 has a cantilever structure supported by beam 25 only in a negative direction of the Y-axis from frame 22. Plummet 30 has a cantilever structure supported by beam 26 only in a positive direction of the Y-axis from frame 22. This structure prevents transition to a different buckling mode and reduces variations and changes in the sensitivity with lapse of time.

Frame 22 has a rectangular shape viewing from the upper surface, and has hollow space 21 at the center to surrounds hollow space 21. Hollow space 21 may have a rectangular shape or a circular shape.

Each of one ends of beams 23 and 24 is connected to respective one of portions of frame 22 opposite to each other one with respect to hollow space 21. Plummets 27 and 28 face each other across center 91A of hollow space 21.

Each of one ends of beams 25 and 26 is connected to respective one of portions of frame 22 opposite to each other with respect to hollow space 21. Plummets 29 and 30 face each other across center 91A of hollow space 21.

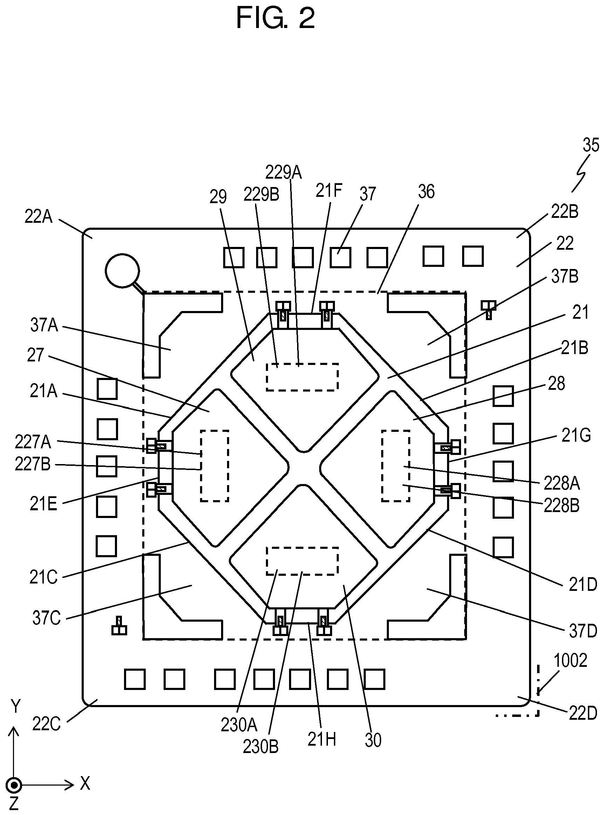

Fig. 2 is a top view of another acceleration sensor 35 according to the first example. In Fig. 2, components identical to those of acceleration sensor 20 shown in Fig. 1 are denoted by the same reference numerals. Acceleration sensor 35 further includes top lid 36 provided above frame 22, opposing electrodes 227A, 228A, 229A, and 230A provided on upper surfaces of plummets 27, 28, 29, and 30, respectively, and opposing electrodes 227B, 228B, 229B, and 230B provided on a lower surface of top lid 36. Opposing electrodes 227B, 228B, 229B, and 230B face opposing electrodes 227A, 228A, 229A, and 230A, respectively. A voltage applied to opposing electrodes 227A, 227B, 228A, 228B, 229A, 229B, 230A, and 230B displaces plummets 27, 28, 29, and 30 in a direction of a Z-axis, thereby allowing sensor 35 and a sensor circuit to perform failure diagnosis.

In sensor 35, an outer circumference of hollow space 21 has four long sides 21A, 21B, 21C, and 21D. Long sides 21A, 21B, 21C, and 21D preferably face corners 22A, 22B, 22C, and 22D of frame 22, respectively. This structure provides frame 22 with bonding portions 37A, 37B, 37C, and 37D to be bonded to top lid 36 in areas between the four long sides and the four corners, causing the area of top lid 36 to be smaller than that of frame 22. The smaller area of top lid 36 causes an end of frame 22 to be exposed from top lid 36 to expose electrode pads 37 on the end of frame 22 from top lid 36. This facilitates connecting pads 37 to a package or IC.

The outer circumference of hollow space 21 preferably has an octagonal shape composed of four long sides 21A, 21B, 21C, and 21D and four short sides 21E, 21F, 21G, and 21H provided alternately. The four short sides are connected preferably to beams 23, 24, 25, and 26, respectively. This structure reduces the lengths of wirings between electrode pads 37 on the four sides and sensing units 31, 32, 33, and 34, thereby preventing unnecessary noise from mixing in.

Frame 22 can be bonded to substrate 1002 or to top lid 36 with a bonding material, metal bonding, room-temperature bonding, or positive-electrode bonding. The bonding material may employ epoxy resin or silicone resin. When heating and hardening the bonding material in the production process, stress is generated due to hardening of the bonding material itself and to the difference of line expansion coefficients between frame 22 and substrate 1002 or top lid 36. The stress accumulates in beams 23, 24, 25, and 26 as residual stress. In acceleration sensors 20 and 35 according to the first example, plummets 27, 28, 29, and 30 have cantilever structures in which plummets 27, 28, 29, and 30 are supported by beams 23, 24, 25, and 26 only in single directions, respectively, thereby prevents transition to different buckling modes. Silicone resin as the bonding material reduces stress due to hardening of the bonding material itself.

The thicknesses of beams 23, 24, 25, and 26 are preferably smaller than the thickness of frame 22 and the thicknesses of plummets 27, 28, 29, and 30. This structure facilitates bending of beams 23, 24, 25, and 26 to increase the sensitivity of sensing acceleration.

Plummets 27, 28, 29, and 30 are connected to the other ends of beams 23, 24, 25, and 26, respectively. The plummets 27, 28, 29, and 30 have projections 27A, 28A, 29A, and 30A, respectively. Projections 27A and 28A face each other preferably across center 91A. Projections 29A and 30A face each other preferably across center 91A. In other words, projections 27A, 28A, 29A, and 30A face each other preferably around center 91A of hollow space 21. This structure allows plummets 27, 28, 29, and 30 to be close to center 91A of hollow space 21 so as to reduce the area of gap 91B of hollow space 21. Accordingly, acceleration sensors 20 and 35 can have small sizes without reducing the mass of four plummets 27, 28, 29, and 30.

Viewing from above (in a direction of the Z-axis, hollow space 21 has a portion occupied by plummets 27 to 30 and gap 91B that is not occupied by any of the plummets. The area of gap 91B is preferably smaller than the total area of the upper surfaces of plummets 27, 28, 29, and 30. This structure increases the area of plummets 27, 28, 29, and 30 occupying hollow space 21, thereby providing sensors 20 and 35 with small sizes without reducing the mass of the plummets 27, 28, 29, and 30. The width of gap 91B is constant. In other words, distances W27, W28, W29, and W30 between frame 22 and plummets 27, 28, 29, and 30, distance D27 between plummets 27 and 29, distance D29 between plummets 28 and 29, distance D28 between plummets 28 and 30, and distance D30 between plummets 27 and 30 are all equal to each other.

The shape of the outer circumference of plummets 27, 28, 29, and 30 facing frame 22 is preferably similar to the shape of the outer circumference of hollow space 21. This structure further increases the area of the plummets occupying hollow space 21, thereby providing sensors 20 and 35 with small sizes without reducing the mass of the four plummets.

Frame 22, beams 23 to 26, and plummets 27 to 30 can be made of material, such as silicon, melting quartz, or alumina. Silicon provides small acceleration sensors 20 and 35 by fine processing technique.

Sensing units 31, 32, 33, and 34 can utilize, e.g. distortion resistance or capacitance. As the distortion resistance, piezoresistors increases the sensitivity of acceleration sensors 20 and 35. As distortion resistance, a thin film resistance method with an oxide film strain resistor improves the temperature characteristics of sensors 20 and 35.

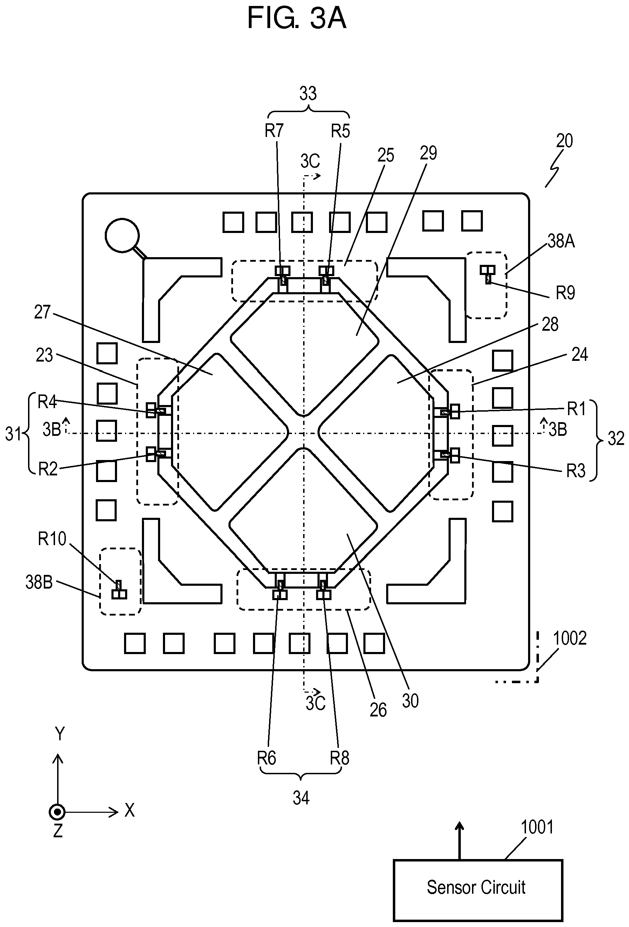

Fig. 3A is a top view of acceleration sensor 20 including sensing units 31, 32, 33, and 34 utilizing the distortion resistance method for illustrating the arrangement of strain resistors R1 to R8. Sensing unit 31 includes strain resistors R2 and R4. Sensing unit 32 includes resistors R1 and R3. Sensing unit 33 includes resistors R5 and R7. Sensing unit 34 includes resistors R6 and R8. Sensing units 38A and 38B including strain resistors R9 and R10 are provided on frame 22. Sensing units 38A and 38B are provided on frame 22 that does not deform due to acceleration, and function as fixed resistance that does not change its resistance due to the acceleration. Strain resistors R1 to R10 having the same structures change their resistance values according to changes of the external environment, such as temperature and humidity. Hence, the strain resistors connected in a bridge circuit compensates changes of the resistance values depending on the external environment, thereby sensing acceleration accurately regardless of the external environment. Resistors R1 to R10 are configured to be connected to sensor circuit 1001.

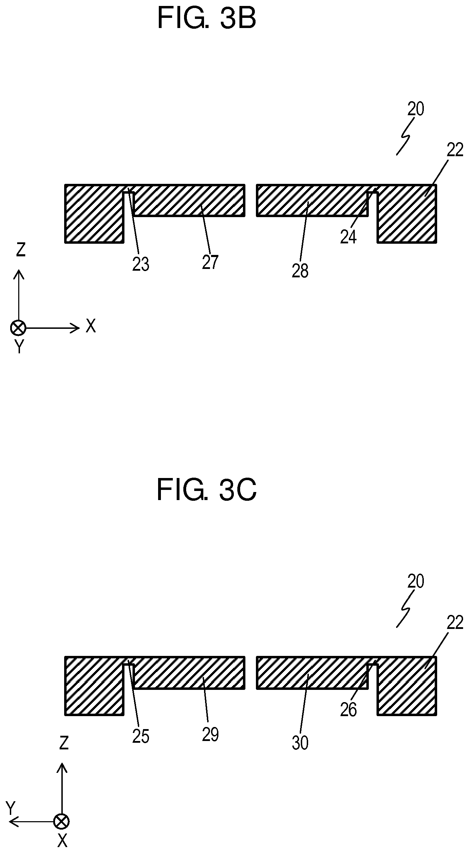

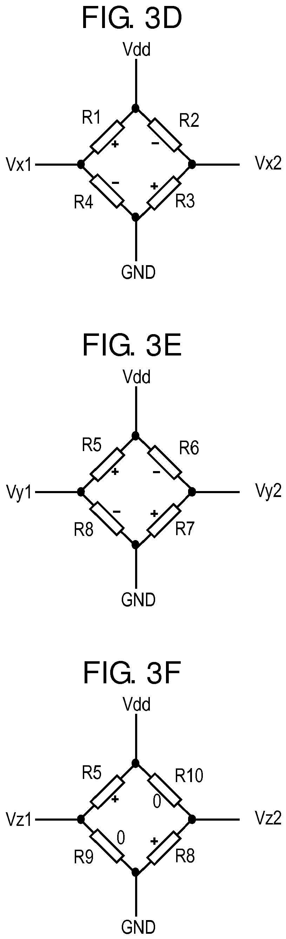

Fig. 3B is a sectional view of sensor 20 at line 3B-3B shown in Fig. 3A. Fig. 3C is a sectional view of sensor 20 at line 3C-3C shown in Fig. 3A. Figs. 3D to 3F are circuit diagrams of sensor 20 for sensing acceleration. These circuits are implemented by sensor circuit 1001 connected to strain resistors R1 to R10.

Fig. 3D shows a circuit for sensing acceleration in directions of the X-axis. As shown in Fig. 3D, in sensor circuit 1001, strain resistors R1, R2, R3, and R4 are connected in bridge. In Fig. 3B, acceleration in the positive direction of the X-axis applied to sensor 20 displaces plummet 28 in the negative direction of the Z-axis and displaces plummet 27 in the positive direction of the Z-axis. This displacement increases the resistance values of strain resistors R1 and R3 and decreases those of resistors R2 and R4. Acceleration in the negative direction of the X-axis applied to sensor 20 displaces plummets 27 and 28 in the directions reverse to the above directions. The resistance values of resistors R1 to R4 change in reverse to the above resistance values. Upon a voltage being applied between a pair of nodes Vdd and GND opposite to each other, sensor circuit 1001 senses a voltage between a pair of nodes Vx1 and Vx2 to determine the acceleration in the directions of the X-axis.

Fig. 3E shows a circuit for sensing acceleration in directions in the Y-axis. As shown in Fig. 3E, in sensor circuit 1001 strain resistors R5, R6, R7, and R8 are connected in bridge. In Fig. 3C, acceleration in the positive direction of the Y-axis applied to sensor 20 displaces plummet 29 in the positive direction of the Z-axis and displaces plummet 30 in the negative direction of the Z-axis. This displacement increases the resistance values of resistors R5 and R7 and decreases those of resistors R6 and R8. Acceleration in the negative direction of the Y-axis applied to sensor 20 displaces plummets 29 and 30 in directions reverse to the above directions. The resistance values of resistors R5 to R8 accordingly change reversely to the above. Upon a voltage applied between a pair of nodes Vdd and GND opposite to each other, sensor circuit 1001 senses a voltage between another pair of nodes Vy1 and Vy2 to determine acceleration in the directions of Y-axis.

Fig. 3F shows a circuit for sensing acceleration in directions of the Z-axis. As shown in Fig. 3F, in sensor circuit 1001, strain resistors R5, R8, R9, and R10 are connected in bridge. In Figs. 3B and 3C, acceleration in the positive direction of the Z-axis applied to sensor 20 displaces plummets 28 to 30 in the positive direction of the Z-axis. This displacement increases the resistance values of resistors R1 to R8. Acceleration in the negative direction of the Z-axis applied to sensor 20 displaces plummets 27 to 30 in the direction reverse to the above direction. The resistance values of resistors R1 to R8 accordingly change reversely to the above. The resistance values of resistors R9 and R10 do not change with the acceleration. Upon a voltage applied between a pair of nodes Vdd and GND opposite to each other, sensor circuit 1001 senses a voltage between another pair of nodes Vz1 and Vz2 to determine eth acceleration in the directions of the Z-axis.

Sensor circuit 1001 can determines the acceleration similarly even if the strain resistors that change in the same way are connected in bridge in a manner different from Figs. 3D to 3F.

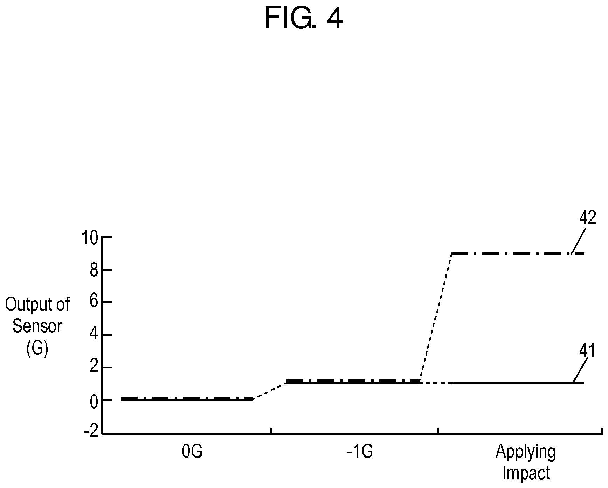

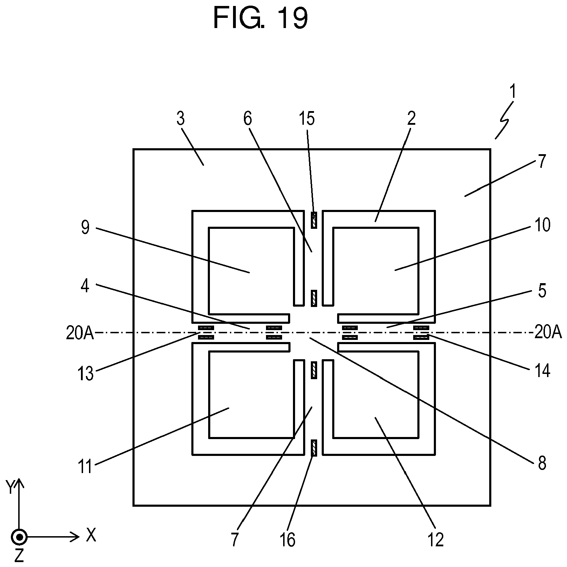

Fig. 4 illustrates fluctuations of an output of sensor 20 having a shock applied thereto. Profile 41 represents an output from sensor 20 according to the first example. Profile 42 represents an output from conventional sensor 1 shown in Fig. 19. As shown in Fig. 4, upon an acceleration of 0G being applied, both outputs of profiles 41 and 42 are 0G. Upon an acceleration of -1G applied, both outputs of profiles 41 and 42 are about 1G. However, when a shock is applied while the acceleration is -1G, profile 41 is not influenced and outputs thereof is about 1G while an output of profile 42 is 9G. In conventional sensor 1, plummet 8 is supported by four beams 4, 5, 6, and 7 in multiple directions, and thus, beams 4, 5, 6, and 7 transition to different buckling modes, hence preventing the acceleration from being determined accurately. Meanwhile, sensor 20 according to the first example has a cantilever structure in which each of plummets 27 to 30 are supported only in single directions, and thus, the beams do not transition to a different buckling mode, hence allowing the acceleration from being determined accurately.

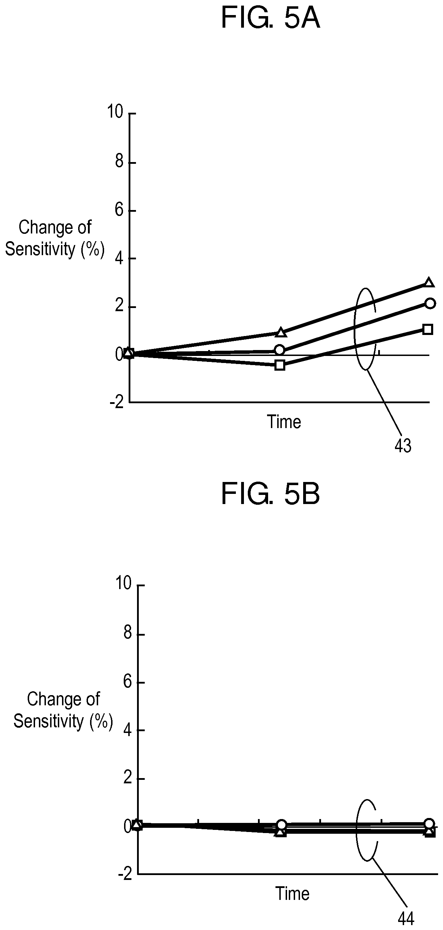

Fig. 5A illustrates changes with elapse of time of the sensitivity of three samples of conventional sensor 1 as comparative examples. Fig. 5B illustrates changes with lapse of time of the sensitivity of three samples of sensor 20 according to the first example. As shown in Fig. 5A, conventional sensor 1 changes its sensitivity as time passes drastically by 3%. This change produces residual stress accumulated in beams 4, 5, 6, and 7 of sensor 1, and then, the residual stress is released with time to cause the beams to transition to different buckling modes. Meanwhile, as shown in Fig. 5B, sensor 20 according to the first example changes its sensitivity by -0.2% maximum as the same time passes. Sensor 20 has a cantilever structure in which plummets 27 to 30 are supported only in single directions, and thus, the release of the residual stress less affects the sensitivity.

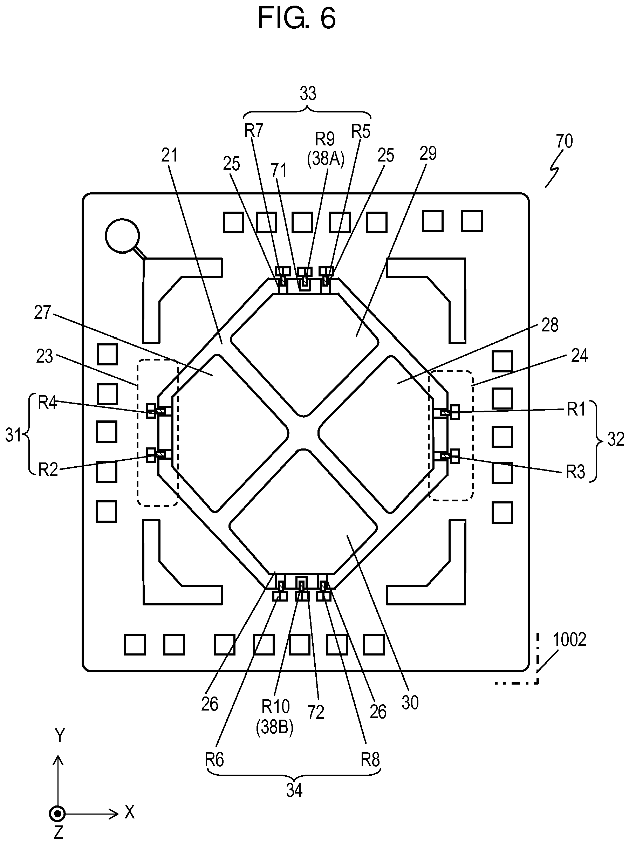

Fig. 6 is a top view of still another sensor 70 according to the invention. In Fig. 6, components identical to those of sensor 20 shown in Fig. 3A are denoted by the same reference numerals. Acceleration sensor 70 further includes beams 71 and 72 that extend from frame 22 to hollow space 21. Each of one ends of beams 71 and 72 are connected to portions of frame 22 opposite to each other. The other ends of beams 71 and 72 are free ends that are not connected to anything. Beam 71 is placed between beams 25. Beam 72 is placed between beams 26.

In acceleration sensor 70, sensing units 38A and 38B including strain resistors R9 and R10 are provided not on frame 22 but on beams 71 and 72, respectively. When frame 22 is fixed to substrate 1002, frame 22 receives stress which accumulates in sensing units 38A and 38B composed of strain resistors R9 and R10. Acceleration sensor 20 shown in Figs. 1 and 3A releases the stress accumulated in strain resistors R9 and R10 as the use of the acceleration sensor. This may prevent the sensor from detecting acceleration in directions of the Z-axis accurately. In acceleration sensor 70 shown in Fig. 6, beams 71 and 72 that have other ends (free ends) generate no stress, and thus, sensing units 38A and 38B composed of strain resistors R9 and R10 provided on beams 71 and 72 receive no stress. Hence, sensor 70 does not change the sensitivity for acceleration in the directions of the Z-axis with lapse of time.

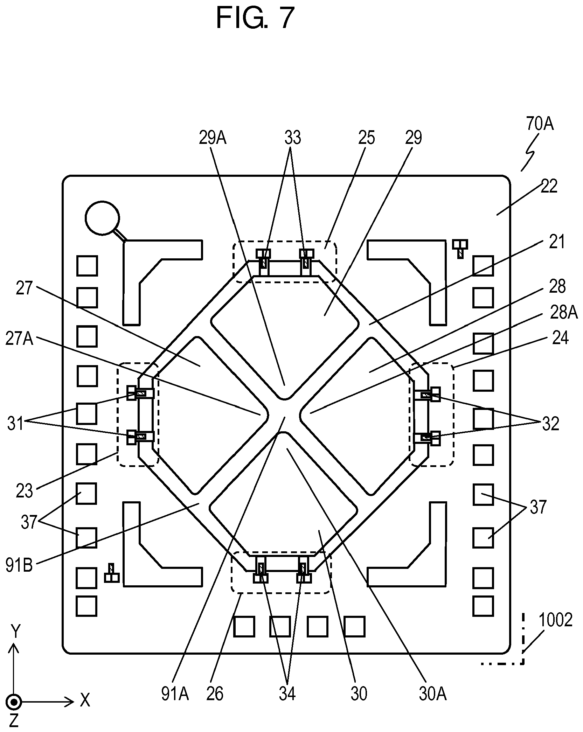

Fig. 7 is a top view of further acceleration sensor 70A according to the first example. In Fig. 7, components identical to those of acceleration sensor 20 shown in Fig. 1 are denoted by the same reference numerals. In acceleration sensor 20 shown in Fig. 1, electrode pads 37 connected to strain resistors R1 to R10 are arranged along the four sides of rectangular frame 22. In acceleration sensor 70A shown in Fig. 7, electrode pads 37 connected to strain resistors R1 to R10 are arranged only along a pair of two sides opposite to each other out of the four sides of rectangular frame 22, not along the other pair of sides opposite to each other. In acceleration sensor 70A on a package having terminals arranged only along two sides opposite to each other, this arrangement shortens bonding wires connecting the terminals to electrode pads 37, thereby reducing noise contained in signals from strain resistors R1 to R10.

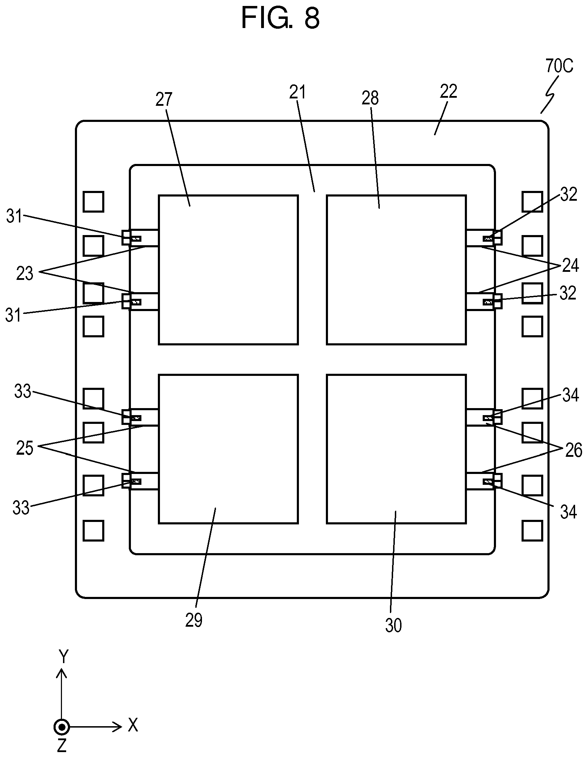

Fig. 8 is a top view of further acceleration sensor 70C according to the first example. In Fig. 8, components identical to those of acceleration sensor 20 shown in Fig. 1 are denoted by the same reference numerals. In acceleration sensor 70C shown in Fig. 8, beams 23 and 25 extend from frame 22 to hollow space 21 in the positive direction of the X-axis while beams 24 and 26 extend from frame 22 to hollow space 21 in the negative direction of the X-axis. Plummets 27 and 28 are arranged in a direction of the X-axis while plummets 29 and 30 are arranged in a direction of the X-axis. Plummets 27 and 29 are arranged in a direction of the Y-axis while plummets 28 and 30 are arranged in a direction of the Y-axis. In acceleration sensor 70C, plummets 27 to 30 are displaced with acceleration in directions of the X-axis and Z-axis but are prevented from being displaced in directions of the Y-axis. Hence, acceleration sensor 70C has a high sensitivity to acceleration in directions of the X-axis and Z-axis while reducing sensitivity in directions of the Y-axis.

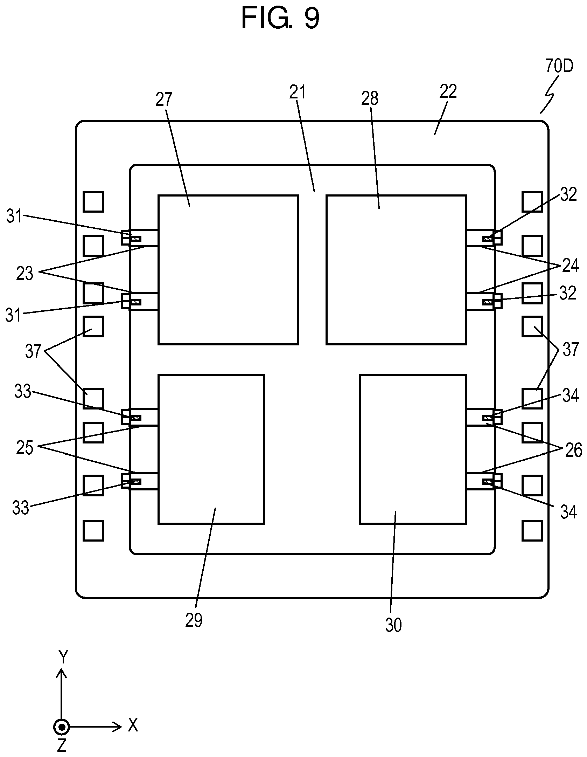

Fig. 9 is a top view of further acceleration sensor 70D according to the first example. In Fig. 9, components identical to those of acceleration sensor 70C shown in Fig. 8 are denoted by the same reference numerals. In sensor 70D, plummets 29 and 30 are smaller than plummets 27 and 28. Sensing units 31 and 32 provided on beams 23 and 24 connected to plummets 27 and 28, respectively, sense acceleration in directions of the X-axis while sensing units 33 and 34 provided on beams 25 and 26 connected to plummets 29 and 30, respectively, sense acceleration in directions of the Z-axis. Plummets 27 to 30 can be displaced more easily in directions of the Z-axis than in directions of the X-axis. Therefore, acceleration sensor 70C shown in Fig. 8 including plummets 27 to 30 having the same size senses acceleration in directions of the X-axis with a sensitivity lower than in directions of the Z-axis. In acceleration sensor 70D shown in Fig. 9, plummets 29 and 30 for sensing acceleration in directions of the Z-axis are smaller than plummets 27 and 28 for sensing acceleration in directions of the X-axis. This structure allows the sensitivity for acceleration in the directions of the X-axis direction to be identical to that in the directions of the Z-axis.

### Second Example

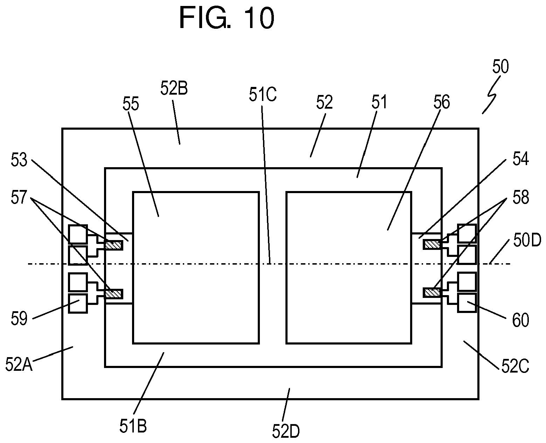

Fig. 10 is a top view of acceleration sensor 50 according to a second example. Sensor 50 includes frame 52 having hollow space 51 at an inside thereof, beams 53 and 54 connected to frame 52 and extending to hollow space 51, plummets 55 and 56 connected to beams 53 and 54, respectively, and sensing units 57 and 58 provided on beams 53 and 54, respectively. One ends of beams 53 and 54 is connected to frame 52. Plummets 55 and 56 are connected other ends of beams 53 and 54, respectively. Plummets 55 and 56 face each other.

Plummets 55 and 56 are supported by beams 53 and 54 only in single directions, thereby preventing transition to a different buckling mode. Hence, the structure reduces variations and temporal changes in the sensitivity.

Frame 52 has a rectangular shape having four sides 52A to 52D. Sides 52A and 52C face each other across hollow space 51 while sides 52B and 52D face each other across hollow space 51. Beams 53 and 54 are connected to sides 52A and 52C, respectively. Side 52A having beam 53 connected thereto preferably has electrode pad 59 provided thereon. Side 52C having beam 54 connected thereto preferably has electrode pad 60 thereon. This structure shortens the wiring distance between sensing unit 57 and electrode pad 59 and between sensing unit 58 and electrode pad 60, thereby preventing unnecessary noise from mixing in.

Beams 53 and 54 extend to hollow space 51 along predetermined axis 50D. Each of one ends of beams 53 and 54 is connected to respective one of portions of frame 52 opposite to each other with respect to the center of frame 52, i.e., center 51C of hollow space 51). Plummets 55 and 56 face each other along predetermined axis 50D.

The area of gap 51B in hollow space 51 that is not occupied by any of plummets 55 and 56 and beams 53 and 54 is smaller than the total area of upper surfaces of plummets 55 and 56. The shape of plummets 55 and 56 both combined is similar to that of hollow space 51. The thicknesses of beams 53 and 54 are smaller than thicknesses of frame 52 and plummets 55 and 56.

### Third Example

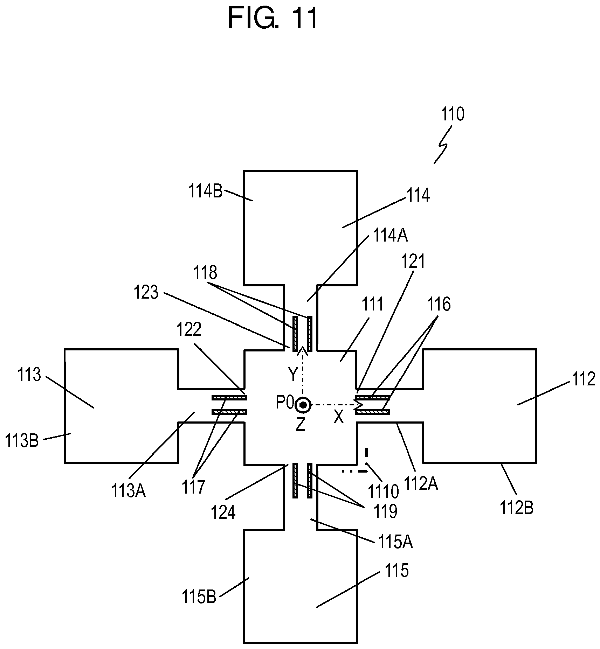

Fig. 11 is a top view of acceleration sensor 110 according to a third example. In the XY plane including the X-axis and the Y-axis crosses at origin P0 and perpendicularly to each other, acceleration sensor 110 includes fixed part 111 placed at origin P0, flexible part 112 having one end connected to fixed part 111, flexible part 113 having one end connected to fixed part 111, flexible part 114 having one end connected to fixed part 111, flexible part 115 having one end connected to fixed part 111, and strain resistors 116, 117, 118, and 119 provided on flexible parts 112, 113, 114, and 115, respectively. Flexible part 112 extends from fixed part 111 in a positive direction of the X-axis. Flexible part 113 extends from fixed part 111 in a negative direction of the X-axis. Flexible part 114 extends from fixed part 111 in a positive direction of the Y-axis. Flexible part 115 extends from fixed part 111 in a negative direction of the Y-axis. Fixed part 111 is configured to be fixed to substrate 1110.

Acceleration sensor 110 is capable of determining acceleration in the directions of the X-axis according to the resistance values of strain resistors 116 and 117, and acceleration in the directions of the Y-axis according to the resistance values of strain resistors 118 and 119. Strain resistors 116, 117, 118, and 119 are provided on connection points 121, 122, 123, and 124 at which flexible parts 112, 113, 114, and 115 are connected to fixed part 111, respectively.

Fixed part 111 supports flexible parts 112 to 115 and is fixed to a support substrate or control IC at the lower surface of fixed part 111.

Flexible part 112 includes beam 112A and plummet 112B. One end of beam 112A is connected to fixed part 111 while the other end of beam 112A is connected to plummet 112B. Plummet 112B has a thickness substantially identical to that of fixed part 111 while beam 112A is thinner than plummet 112B and fixed part 111. This structure allows beam 112A to likely deform due to acceleration in directions of the X-axis, accordingly increasing the sensitivity. Similarly, flexible part 113 includes beam 113A and plummet 113B. One end of beam 113A is connected to fixed part 111 while the other end of beam 113A is connected to plummet 113B. Plummet 113B has a thickness substantially identical to that of fixed part 111 while beam 113A is thinner than plummet 113B and fixed part 111. This structure allows beam 113A to likely deform due to acceleration in the directions of the X-axis, accordingly increasing the sensitivity. Flexible part 114 includes beam 114A and plummet 114B. One end of beam 114A is connected to fixed part 111 while the other end of beam 114A is connected to plummet 114B. Plummet 114B has a thickness substantially identical to that of fixed part 111 while beam 114A is thinner than plummet 114B and fixed part 111. This structure allows beam 114A to likely deform due to acceleration in directions of the Y-axis, accordingly increasing the sensitivity. Flexible part 115 includes beam 115A and plummet 115B. One end of beam 115A is connected to fixed part 111 while the other end of beam 115A is connected to plummet 115B. Plummet 115B has a thickness substantially identical to that of fixed part 111 while beam 115A is thinner than plummet 115B and fixed part 111. This structure allows beam 115A to likely deform due to acceleration in the directions of the Y-axis, accordingly increasing the sensitivity.

Fixed part 111 and flexible parts 112 to 115 can be made of a nonpiezoelectric material, such as silicon (Si), stainless steel, or a piezoelectric material, such as crystal or lithium niobate. According to the third example, a silicon-on-insulator (SOI) substrate composed of an active layer, an intermediate oxide film, and a base layer is used. In the SOI substrate, the base layer and the intermediate oxide film are removed by etching, to form beams 112A to 115A easily.

Strain resistors 116 to 119 are made of a material, such as constantan (copper-nickel alloy), diamond, chromium oxide, or aluminum nitride, having an electric resistance changing in response to distortion. Such a material is deposited on the surface of the active layer of the SOI substrate to form a thin film, and then, the surface is etched to form a predetermined pattern.

A method of measuring acceleration with acceleration sensor 110 shown in Fig. 11 will be described below.

When sensor 110 receives acceleration in the positive direction of the X-axis, plummet 112B is displaced in the negative direction of the Z-axis to bend flexible part 112 in the negative direction of the Z-axis, accordingly increasing the resistance value of strain resistor 116 provided on flexible part 112. Meanwhile, plummet 113B is displaced in the positive direction of the Z-axis to bend flexible part 113 in the positive direction of the Z-axis, accordingly decreasing the resistance value of strain resistor 117 provided on flexible part 113. Conversely, acceleration in the negative direction of the X-axis decreases the resistance value of strain resistor 116 and increases that of strain resistor 117. A sensor circuit electrically connected to strain resistors 116 and 117 determines the acceleration in the directions of the X-axis according to the ratio of the resistance values of strain resistors 116 and 117.

When sensor 110 receives acceleration in the positive direction of the Y-axis, plummet 114B is displaced in the negative direction of the Z-axis to bend flexible part 114 in the negative direction of the Z-axis, accordingly increasing the resistance value of strain resistor 118 provided on flexible part 114. Meanwhile, plummet 115B is displaced in the positive direction of the Z-axis to bend flexible part 115 in the positive direction of the Z-axis, accordingly decreasing the resistance value of strain resistor 119 provided on flexible part 115. Conversely, acceleration in the negative direction of the Y-axis decreases the resistance value of strain resistor 118 and increases that of strain resistor 119. The sensor circuit electrically connected to strain resistors 118 and 119 determines acceleration in the directions of the Y-axis according to the ratio of the resistance values of strain resistors 118 and 119.

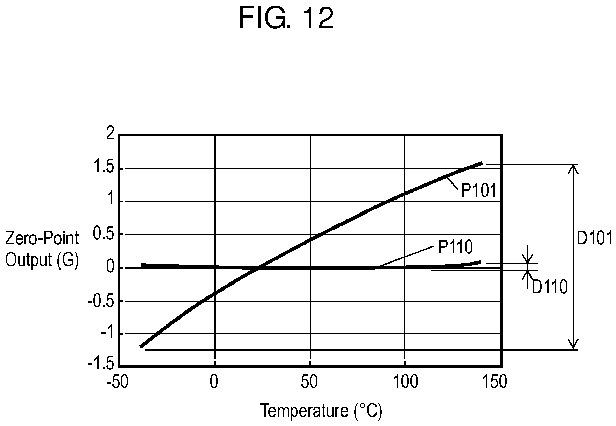

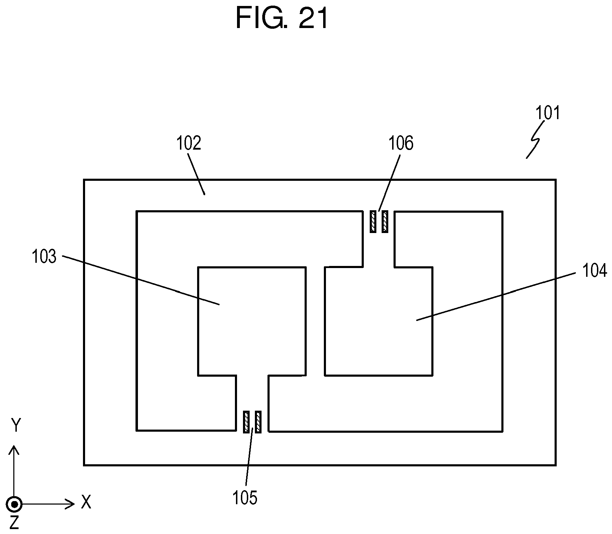

Fig. 12 shows temperature profile P110 of acceleration sensor 110. Fig. 12 also shows temperature profile P101 of conventional sensor 101 shown in Fig. 21. In Fig. 12, the horizontal axis represents a temperature, and the vertical axis represents acceleration values (hereinafter, zero-point output) in directions of the X-axis output from sensors 101 and 110 while acceleration is not applied. Temperature profile P101 of conventional sensor 101 outputs -1.24G at -40°C and outputs +1.53G at +140°C. Meanwhile, temperature profile P110 of sensor 110 according to the third example outputs +0.02G at -40°C and outputs +0.08 G at +140°C. Zero-point fluctuations D101 and D110 are defined as amounts of fluctuation of the zero-point output in a temperature range from -40°C to 140°C. Zero-point fluctuation D101 of temperature profile P101 of conventional sensor 101 is 2.77G while zero-point fluctuation D110 of temperature profile P110 of sensor 110 according to the third example is 0.11G. Zero-point fluctuation D110 is thus significantly smaller than zero-point fluctuation D101, thus being improved. A reason for this will be described below.

In order to form strain resistors 116 to 119, material for the strain resistors are deposited on a substrate, such as an SOI substrate, to form a thin film. It is extremely difficult to form the thin film with a completely uniform thickness and structure, and thus, variations in film thickness and film structure exist within the surface of the substrate.

In conventional sensor 101 shown in Fig. 21, since strain resistors 105 and 106 are located far away from each other, characteristics of strain resistors 105 and 106 are different from each other due to the variations of the thin film within the surface of the substrate. This difference provides a difference between the resistance values of strain resistors 105 and 106 even when the acceleration is not applied externally. The sensor circuit determines the acceleration according to the difference of the resistance values of strain resistors 105 and 106, which causes a certain amount of zero-point output. Further, the different temperature dependence of resistance values between strain resistors 105 and 106 causes a large amount of zero-point output.

Meanwhile, in acceleration sensor 110 according to the third example, strain resistors 116 to 119 contain connection points 121 to 124 at which flexible parts 112 to 115 are connected to fixed part 111, respectively. Strain resistors 116 to 119 are positioned close to each other. This arrangement relatively reduces variations in thickness and structure of a thin film to becoming strain resistors 116 to 119 within the surface of the substrate, accordingly reducing variations of the resistance values of strain resistors 116 to 119 and the temperature dependence of the distortion resistance characteristics. Consequently, acceleration sensor 110 according to the third example provides a smaller zero-point output and a smaller zero-point fluctuation than conventional acceleration sensor 101.

Conventional acceleration sensor 101 is fixed to a support substrate or a control IC composing a sensor circuit, at the lower surface of frame 102. In this case, sensor 101 is fixed with plural bonding parts provided at the lower surface of frame 102, and thus sensor 101 becomes distorted due to the difference of bonding states of the two bonding parts, causing degradation of sensitivity with lapse of time. Meanwhile, in acceleration sensor 110 according to the third example, fixed part 111 is fixed to a support substrate or a control IC composing a sensor circuit, at one point of the lower surface, and thus acceleration sensor 110 becomes less distorted, reducing degradation of sensitivity with lapse of time.

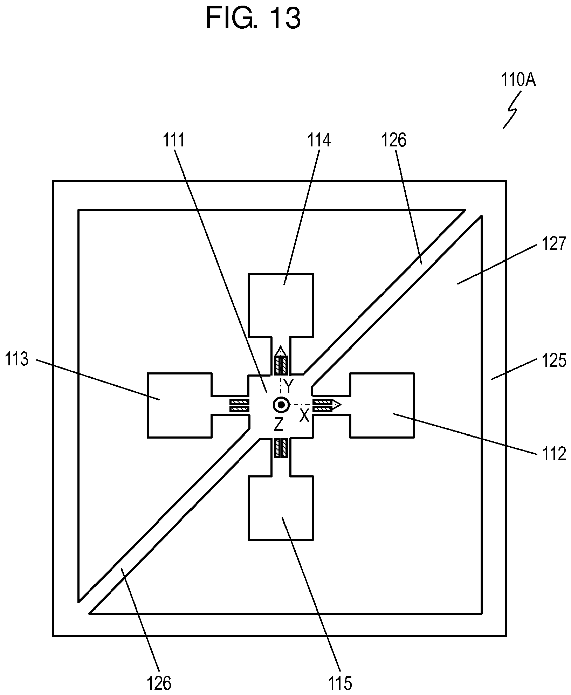

Fig. 13 is a top view of another acceleration sensor 110A according to the third example. In Fig. 13, components identical to those of acceleration sensor 110 shown in Fig. 11 are denoted by the same reference numerals. Sensor 110A includes frame 125 having hollow space 127 at an inside thereof, and further includes fixed part 111 and flexible parts 112 to 115 provided in hollow space 127. Acceleration sensor 110A further includes joint 126 for connecting fixed part 111 to frame 125. This structure allows an electrode pad provided on frame 125 to be connected to a control IC and a top lid to be joined.

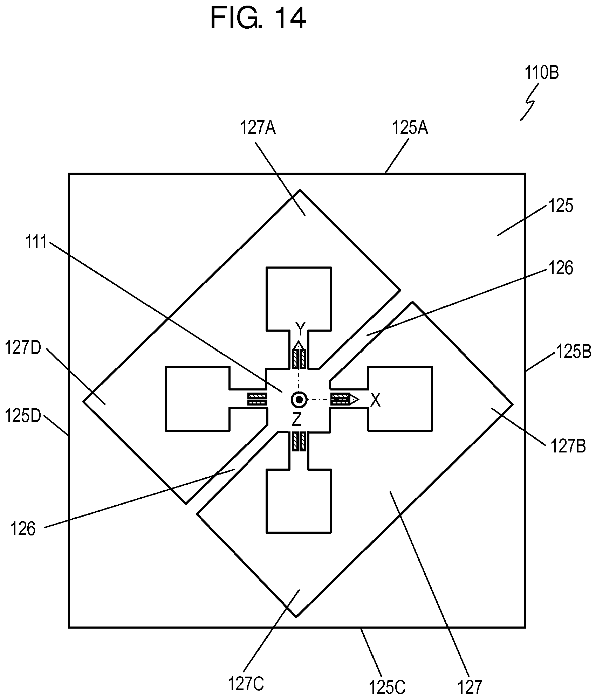

Fig. 14 is a top view of still another acceleration sensor 110B according to the third example. In Fig. 14, components identical to those of acceleration sensor 110A shown in Fig. 13 are denoted by the same reference numerals. Hollow space 127 of acceleration sensor 110B has a rectangular shape. Four corners 127A, 127B, 127C, and 127D of rectangular hollow space 127 are close to the centers of four sides 125A, 125B, 125C, and 125D of frame 125, respectively. This structure shortens the length of joint 126 and the distance between fixed part 111 and frame 125, accordingly increasing a resistance to impact of sensor 110B.

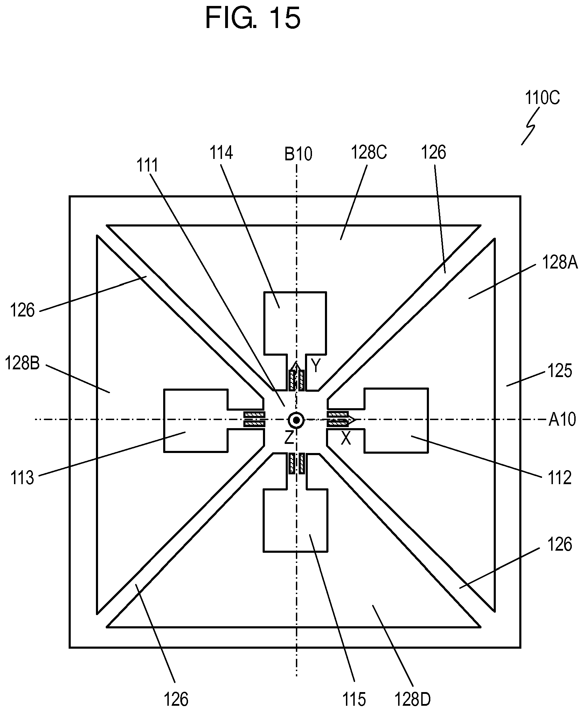

Fig. 15 is a top view of further acceleration sensor 110C according to the third example. In Fig. 15, components identical to those of acceleration sensor 110A shown in Fig. 13 are denoted by the same reference numerals. Acceleration sensor 110C includes four joints 126 connected to the corners of frame 125, respectively. Flexible parts 112 to 115 are provided in four regions 128A to 128D formed by frame 125 and four joints 126, respectively. This structure allows flexible parts 112 to 115 and frame 125 to be fixed to fixed part 111 symmetrically with respect to axis A10 parallel with the X axis and with respect to axis B10 parallel with the Y axis. Consequently, flexible parts 114 and 115 become resistant to bending with acceleration in directions of the X-axis while flexible parts 112 and 113 become resistant to bending with acceleration in directions of the Y-axis direction, accordingly reducing the sensitivity of acceleration sensor 110C in directions of the other axis.

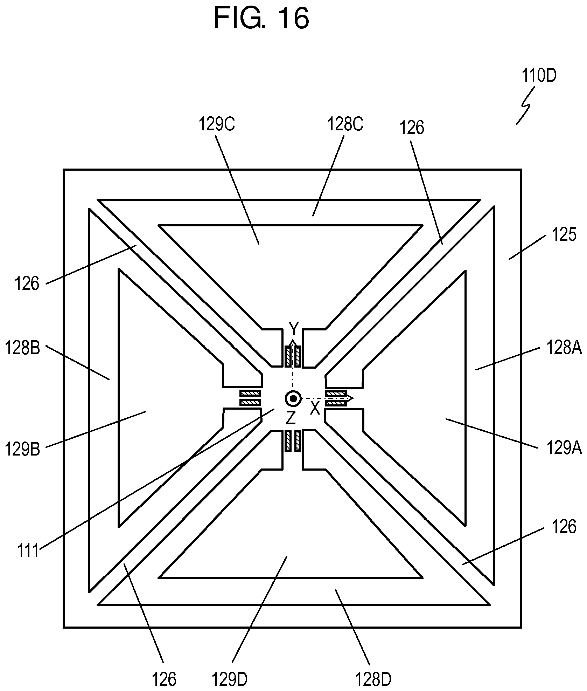

Fig. 16 is a top view of further sensor 110D according to the third example. In Fig. 16, components identical to those of acceleration sensor 110C shown in Fig. 15 are denoted by the same reference numerals. In sensor 110D, plummets 129A, 129B, 129C, and 129D have a shape substantially similar to that of regions 128A, 128B, 128C, and 128D that are surrounded by frame 125, joint 126, and fixed part 111. This structure increases the sizes of plummets 129A, 129B, 129C, and 129D without increasing the size of frame 125, providing acceleration sensor 110D with both a small size and a high sensitivity.

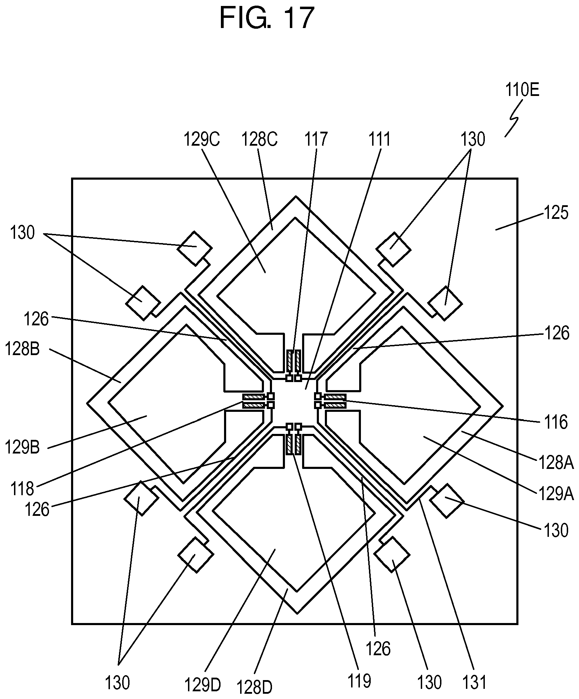

Fig. 17 is a top view of yet further acceleration sensor 110E according to the third example. In Fig. 17, components identical to those of acceleration sensor 110D shown in Fig. 16 are denoted by the same reference numerals. In sensor 110E, the corners of regions 128A, 128B, 128C, and 128D that are surrounded by frame 125, joint 126, and fixed part 111 are positioned close to the centers of the four sides of frame 125. Plummets 129A, 129B, 129C, and 129D have shapes substantially similar to the shapes of regions 128A, 128B, 128C, and 128D, respectively. This structure shortens the distance between fixed part 111 and frame 125, and the length of joint 126, accordingly increasing resistance of sensor 110E to impact.

Electrode pads 130 are provided at the corners of frame 125. Each of electrode pads 130 is electrically connected to strain resistors 116 to 119 with wirings 131. Pads 130 are electrically connected to a control IC composing a sensor circuit by, e.g. wire bonding. In the case that electrode pads 130 are provided around the center of each side of frame 125, the corners of regions 128A, 128B, 128C, and 128D are close to the centers of the four sides of frame 125, and accordingly, cause the sides to be long enough to form pads 130, hence increasing the size of acceleration sensor 110E. Electrode pads 130 provided at the corners of frame 125 reduces the size of acceleration sensor 110E.

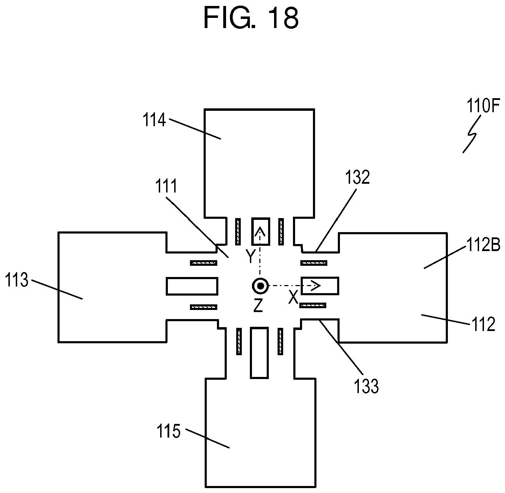

Fig. 18 is a top view of further acceleration sensor 110F according to the third example. In Fig. 18, components identical to those of acceleration sensor 110 shown in Fig. 11 are denoted by the same reference numerals. In sensor 110F, plummet 112B of flexible part 112 is connected to fixed part 111 with two beams 132 and 133. Similarly, each of the plummets of flexible parts 113, 114, and 115 is connected to fixed part 111 with two beams. This structure reduces torsion of flexible parts 112 to 115. More specifically, flexible parts 112 and 113 are prevented from being displaced in directions of the Y-axis. Flexible parts 114 and 115 are prevented from being displaced in directions of the X-axis. This structure reduces the sensitivity of acceleration sensor 110F in directions of the other axis. This structure also strengthens flexible parts 112 to 115, thus increasing resistance of sensor 110F to impact.

### INDUSTRIAL APPLICABILITY

An acceleration sensor according to the present invention reduces variations and changes of the sensitivity with lapse of time, and is useful for vehicle-mounted, mobile, and other terminals.

### REFERENCE MARKS IN THE DRAWINGS

- 20: Acceleration Sensor
- 21: Hollow Space
- 22: Frame
- 23: Beam (First Beam)
- 24: Beam (Second Beam)
- 25: Beam (Third Beam)
- 26: Beam (Fourth Beam)
- 27: Plummet (First Plummet)
- 28: Plummet (Second Plummet)
- 29: Plummet (Third Plummet)
- 30: Plummet (Fourth Plummet)
- 31: Sensing Unit (First Sensing Unit)
- 32: Sensing Unit (Second Sensing Unit)
- 33: Sensing Unit (Third Sensing Unit)
- 34: Sensing Unit (Fourth Sensing Unit)
- 35: Acceleration Sensor
- 38A: Sensing Unit
- 38B: Sensing Unit
- 50: Acceleration Sensor
- 50D: Predetermined Axis
- 51: Hollow Space
- 51C: Center
- 52: Frame
- 53: Beam (First Beam)
- 54: Beam (Second Beam)
- 55: Plummet (First Plummet)
- 56: Plummet (Second Plummet)
- 57: Sensing Unit (First Sensing Unit)
- 58: Sensing Unit (Second Sensing Unit)
- 70: Acceleration Sensor
- 70A: Acceleration Sensor
- 70C: Acceleration Sensor
- 70D: Acceleration Sensor
- 91A: Center

## Claims

1. An acceleration sensor comprising:
a frame (22) having a hollow space (21) at an inside thereof;
first beams (23) extending to the hollow space (21), the first beams (23) having one ends and other ends opposite to the one ends of the first beams (23), the one ends of the first beams (23) being connected to the frame (22);
second beams (24) extending to the hollow space (21), the second beams (24) having one ends and other ends opposite to the one ends of the second beams (24), the one ends of the second beams (24) being connected to the frame (22);
third beams (25) extending to the hollow space (21), the third beams (25) having one ends and other ends opposite to the one ends of the third beams (25), the one ends of the third beams (25) being connected to the frame (22);
fourth beams (26) extending to the hollow space (21), the fourth beams (26) having one ends and other ends opposite to the one ends of the fourth beams (26), the one ends of the fourth beams (26) being connected to the frame (22);
a first plummet (27) connected to the other ends of the first beams (23);
a second plummet (28) connected to the other ends of the second beams (24);
a third plummet (29) connected to the other ends of the third beams (25);
a fourth plummet (30) connected to the other ends of the fourth beams (26);
a first sensing unit (31) disposed at the first beams (23);
a second sensing unit (32) disposed at the second beams (24);
a third sensing unit (33) disposed at the third beams (25);
a fourth sensing unit (34) disposed at the fourth beams (26);
wherein the one ends of the first beams (23) and the one ends of the second beams (24) are connected to respective one of portions of the frame (22) opposite to each other with respect to the hollow space (21),
wherein the first plummet (27) faces the second plummet (28) across a center of the hollow space (21),
wherein the one ends of the third beams (25) and the one ends of the fourth beams (26) are connected to respective one of portions of the frame (22) opposite to each other with respect to the hollow space (21), and
wherein the third plummet (29) faces the fourth plummet (30) across the center of the hollow space (21),
wherein the first beams (23), the second beams (24), the third beams (25) and the fourth beams (26) are respectively a first pair of beams (23), a second pair of beams (24), a third pair of beams (25) and fourth pair of beams (26),
and the acceleration sensor further comprises :
a fifth beam (71) extending to the hollow space (21), the fifth beam (71) having one end and another end opposite to the one end of the fifth beam (71), the one end of the fifth beam (71) being connected to the frame (22);
a sixth beam (72) extending to the hollow space (21), the sixth beam (72) having one end and another end opposite to the one end of the sixth beam (72), the one end of the sixth beam (72) being connected to the frame (22);
wherein the another end of the fifth beam (71) is a free end and the another end of the sixth beam (72) is a free end,
wherein the fifth beam (71) is provided between the two beams of the third pair of beams (25) and the sixth beam (72) is provided between the two beams of the fourth pair of beams (26),
wherein a fifth sensing unit (38A) is disposed at the fifth beam (71) and a sixth sensing unit (38B) is disposed at the sixth beam (72).

2. The acceleration sensor according to claim 1,
wherein the first, second, third, and fourth plummets (27, 28, 29, 30) have projections (27, 28, 29, 30),
wherein the projection of the first plummet (27) faces the projection of the second plummet (28) across the center of the hollow space (21), and
wherein the projection of the third plummet (29) faces the projection of the fourth plummet (30) across the center of the hollow space (21).

3. The acceleration sensor according to any one of claims 1 and 2, wherein, an area of a gap in the hollow space (21) that is not occupied by any of the first, second, third, and fourth plummets (27, 28, 29, 30) and the first, second, third, and fourth beams (23, 24, 25, 26) is smaller than a total area of upper surfaces of the first, second, third, and fourth plummets (27, 28, 29, 30).

4. The acceleration sensor according to any one of claims 1 to 3, wherein a shape of the first, second, third, and fourth plummets (27, 28, 29, 30) all combined is similar to a shape of the hollow space (21).

5. The acceleration sensor according to any one of claims 1 to 4, wherein thicknesses of the first, second, third, and fourth beams (23, 24, 25, 26) are smaller than a thickness of the frame (22) and thicknesses of the first, second, third, and fourth plummets (27, 28, 29, 30).

## Patentansprüche

1. Beschleunigungssensor, umfassend:
einen Rahmen (22), aufweisend einen Hohlraum (21) in seinem Inneren;
erste Balken (23), die sich bis zum Hohlraum (21) erstrecken, wobei die ersten Balken (23) eine Enden und den einen Enden der ersten Balken (23) gegenüberliegende andere Enden aufweisen, wobei die einen Enden des ersten Balkens (23) mit dem Rahmen (22) verbunden sind;
zweite Balken (24), die sich bis zum Hohlraum (21) erstrecken, wobei die zweiten Balken (24) eine Enden und den einen Enden der zweiten Balken (24) gegenüberliegende andere Enden aufweisen, wobei die einen Enden des zweiten Balkens (24) mit dem Rahmen (22) verbunden sind;
dritte Balken (25), die sich bis zum Hohlraum (21) erstrecken, wobei die dritten Balken (25) eine Enden und den einen Enden der dritten Balken (25) gegenüberliegende andere Enden aufweisen, wobei die einen Enden des dritten Balkens (25) mit dem Rahmen (22) verbunden sind;
vierte Balken (26), die sich bis zum Hohlraum (21) erstrecken, wobei die vierten Balken (26) eine Enden und den einen Enden der vierten Balken (26) gegenüberliegende andere Enden aufweisen, wobei die einen Enden des vierten Balkens (26) mit dem Rahmen (22) verbunden sind;
ein erstes Lot (27), das mit den anderen Enden der ersten Balken (23) verbunden ist;
ein zweites Lot (28), das mit den anderen Enden der zweiten Balken (24) verbunden ist;
ein drittes Lot (29), das mit den anderen Enden der dritten Balken (25) verbunden ist;
ein viertes Lot (30), das mit den anderen Enden der vierten Balken (26) verbunden ist;
eine erste Erfassungseinheit (31), die an den ersten Balken (23) angeordnet ist;
eine zweite Erfassungseinheit (32), die an den zweiten Balken (24) angeordnet ist;
eine dritte Erfassungseinheit (33), die an den dritten Balken (25) angeordnet ist;
eine vierte Erfassungseinheit (34), die an den vierten Balken (26) angeordnet ist;
wobei die einen Enden der ersten Balken (23) und die einen Enden der zweiten Balken (24) mit den jeweiligen Abschnitten des Rahmens (22) einander gegenüber im Verhältnis zum Hohlraum (21) verbunden sind,
wobei das erste Lot (27) über eine Mitte des Hohlraums (21) dem zweiten Lot (28) zugewandt ist,
wobei dies eine Enden des dritten Balkens (25) und die eine Enden des vierten Balkens (26) mit den jeweiligen Abschnitten des Rahmens (22) einander gegenüber im Verhältnis zum Hohlraum (21) verbunden sind, und
wobei das dritte Lot (29) über die Mitte des Hohlraums (21) dem vierten Lot (30) zugewandt ist,
wobei die ersten Balken (23), die zweiten Balken (24), die dritten Balken (25) und die vierten Balken (26) jeweils ein erstes Paar von Balken (23), ein zweites Paar von Balken (24), ein drittes Paar von Balken (25) und ein viertes Paar von Balken (26) sind,
und der Beschleunigungssensor ferner aufweist:
einen fünften Balken (71), der sich bis zum Hohlraum (21) erstreckt, wobei der fünfte Balken (71) ein Ende und ein dem einen Ende des fünften Balkens (71) gegenüberliegendes anderes Ende aufweist, wobei das eine Ende des fünften Balkens (71) mit dem Rahmen (22) verbunden ist;
einen sechsten Balken (72), der sich bis zum Hohlraum (21) erstreckt, wobei der sechste Balken (72) ein Ende und ein dem einen Ende des sechsten Balkens (72) gegenüberliegendes anderes Ende aufweist, wobei das eine Ende des sechsten Balkens (72) mit dem Rahmen (22) verbunden ist;
wobei das andere Ende des fünften Balkens (71) ein freies Ende ist und das andere Ende des sechsten Balkens (72) ein freies Ende ist,
wobei der fünfte Balken (71) zwischen den zwei Balken des dritten Paars von Balken (25) bereitgestellt ist und der sechste Balken (72) zwischen den zwei Balken des vierten Paars von Balken (26) bereitgestellt ist
wobei eine fünfte Erfassungseinheit (38A) am fünften Balken (71) angeordnet ist und eine sechste Erfassungseinheit (38B) am sechsten Balken (72) angeordnet ist.

2. Beschleunigungssensor nach Anspruch 1,
wobei das erste, zweite, dritte und vierte Lot (27, 28, 29, 30) Vorsprünge (27, 28, 29, 30) aufweisen,
wobei der Vorsprung des ersten Lots (27) dem Vorsprung des zweiten Lots (28) über die Mitte des Hohlraums (21) zugewandt ist,
wobei der Vorsprung des dritten Lots (29) dem Vorsprung des vierten Lots (30) über die Mitte des Hohlraums (21) zugewandt ist.

3. Beschleunigungssensor nach einem der Ansprüche 1 und 2, wobei ein Bereich eines Spalts im Hohlraum (21), der nicht von einem der ersten, zweiten, dritten und vierten Lote (27, 28, 29, 30) und den ersten, zweiten, dritten und vierten Balken (23, 24, 25, 26) eingenommen wird, kleiner ist als eine Gesamtfläche der oberen Oberflächen der ersten, zweiten, dritten und vierten Lote (27, 28, 29, 30).

4. Beschleunigungssensor nach einem der Ansprüche 1 bis 3, wobei eine Form der ersten, zweiten, dritten und vierten Lote (27, 28, 29, 30) alle in Kombination ähnlich einer Form des Hohlraums (21) ist.

5. Beschleunigungssensor nach einem der Ansprüche 1 bis 4, wobei Dicken der ersten, zweiten, dritten und vierten Balken (23, 24, 25, 26) kleiner sind als eine Dicke des Rahmens (22) und Dicken der ersten, zweiten, dritten und vierten Lote (27, 28, 29, 30).

## Revendications

1. Capteur d'accélération comprenant :
un cadre (22) présentant un espace creux (21) au niveau d'un intérieur de celui-ci ;
des premières barres (23) s'étendant vers l'espace creux (21), les premières barres (23) présentant des unes extrémités et d'autres extrémités opposées aux unes extrémités des premières barres (23), les unes extrémités de la première barre (23) étant reliées au cadre (22) ;
des deuxièmes barres (24) s'étendant vers l'espace creux (21), les deuxièmes barres (24) présentant des unes extrémités et d'autres extrémités opposées aux unes extrémités des deuxièmes barres (24), les unes extrémités des deuxièmes barres (24) étant reliées au cadre (22) ;
des troisièmes barres (25) s'étendant vers l'espace creux (21), les troisièmes barres (25) présentant des unes extrémités et d'autres extrémités opposées aux unes extrémités des troisièmes barres (25), les unes extrémités des troisièmes barres (25) étant reliées au cadre (22) ;
des quatrièmes barres (26) s'étendant vers l'espace creux (21), les quatrièmes barres (26) présentant des unes extrémités et d'autres extrémités opposées aux unes extrémités des quatrièmes barres (26), les unes extrémités des quatrièmes barres (26) étant reliées au cadre (22) ;
un premier plomb (27) relié aux autres extrémités des premières barres (23) ;
un deuxième plomb (28) relié aux autres extrémités des deuxièmes barres (24) ;
un troisième plomb (29) relié aux autres extrémités des troisièmes barres (25) ;
un quatrième plomb (30) relié aux autres extrémités des quatrièmes barres (26) ;
une première unité de détection (31) disposée au niveau des premières barres (23) ;
une deuxième unité de détection (32) disposée au niveau des deuxièmes barres (24) ;
une troisième unité de détection (33) disposée au niveau des troisièmes barres (25) ;
une quatrième unité de détection (34) disposée au niveau des quatrièmes barres (26) ;
dans lequel les unes extrémités des premières barres (23) et les unes extrémités des deuxièmes barres (24) sont reliées à des parties respectives du cadre (22) opposées les unes aux autres par rapport à l'espace creux (21),
dans lequel le premier plomb (27) fait face au deuxième plomb (28) à travers un centre de l'espace creux (21),
dans lequel les unes extrémités des troisièmes barres (25) et les unes extrémités des quatrièmes barres (26) sont reliées à l'une des parties respectives du cadre (22) opposées les unes aux autres par rapport à l'espace creux (21), et
dans lequel le troisième plomb (29) fait face au quatrième plomb (30) à travers le centre de l'espace creux (21),
dans lequel les premières barres (23), les deuxièmes barres (24), les troisièmes barres (25) et les quatrièmes barres (26) sont respectivement une première paire de barres (23), une deuxième paire de barres (24), une troisième paire de barres (25) et une quatrième paire de barres (26),
et le capteur d'accélération comprend en outre :
une cinquième barre (71) s'étendant vers l'espace creux (21), la cinquième barre (71) présentant une extrémité et une autre extrémité opposée à la une extrémité de la cinquième barre (71), la une extrémité de la cinquième barre (71) étant reliée au cadre (22) ;
une sixième barre (72) s'étendant vers l'espace creux (21), la sixième barre (72) présentant une extrémité et une autre extrémité opposée à la une extrémité de la sixième barre (72), la une extrémité de la sixième barre (72) étant reliée au cadre (22) ;
dans lequel l'autre extrémité de la cinquième barre (71) est une extrémité libre et l'autre extrémité de la sixième barre (72) est une extrémité libre,
dans lequel la cinquième barre (71) est prévue entre les deux barres de la troisième paire de barres (25) et la sixième barre (72) est prévue entre les deux barres de la quatrième paire de barres (26),
dans lequel une cinquième unité de détection (38A) est disposée au niveau de la cinquième barre (71) et une sixième unité de détection (38B) est disposée au niveau de la sixième barre (72).

2. Capteur d'accélération selon la revendication 1,
dans lequel les premier, deuxième, troisième et quatrième plombs (27, 28, 29, 30) présentent des projections (27, 28, 29, 30),
dans lequel la projection du premier plomb (27) fait face à la projection du deuxième plomb (28) à travers le centre de l'espace creux (21), et
dans lequel la projection du troisième plomb (29) fait face à la projection du quatrième plomb (30) à travers le centre de l'espace creux (21).

3. Capteur d'accélération selon l'une quelconque des revendications 1 et 2, dans lequel une zone d'un interstice dans l'espace creux (21) qui n'est occupée par aucun des premier, deuxième, troisième et quatrième plombs (27, 28, 29, 30) et des première, deuxième, troisième et quatrième barres (23, 24, 25, 26) est plus petite qu'une zone totale de surfaces supérieures des premier, deuxième, troisième et quatrième plombs (27, 28, 29, 30).

4. Capteur d'accélération selon l'une quelconque des revendications 1 à 3, dans lequel une forme des premier, deuxième, troisième et quatrième plombs (27, 28, 29, 30) tous combinés est semblable à une forme de l'espace creux (21).

5. Capteur d'accélération selon l'une quelconque des revendications 1 à 4, dans lequel des épaisseurs des première, deuxième, troisième et quatrième barres (23, 24, 25, 26) sont plus petites qu'une épaisseur du cadre (22) et des épaisseurs des premier, deuxième, troisième et quatrième plombs (27, 28, 29, 30).
